# EUROPÄISCHE PATENTSCHRIFT

(11) **EP 2 936 125 B1**
(45) Veröffentlichungstag und Bekanntmachung des Hinweises auf die Patenterteilung: **04.03.2026**
(21) Anmeldenummer: 13830037.1
(22) Anmeldetag: 23.12.2013
(51) Int. Cl.: G01N 21/84, G02B 21/36

(54) **POC-TESTSYSTEM MIT MOBILER RECHNEREINHEIT UND VERFAHREN**
POC-TEST SYSTEM WITH MOBILE COMPUTER UNIT AND METHOD
SYSTÈME DE TEST POC COMPRENANT UNE UNITÉ D'ORDINATEUR MOBILE ET PROCÉDÉ

(30) Priorität: 22.12.2012 EP 12199312
(43) Veröffentlichungstag der Anmeldung: 28.10.2015
(73) Patentinhaber: Zendia GmbH, 48324 Sendenhorst-Albersloh (DE)
(72) Erfinder: BÖSE, Guido, 48324 Sendenhorst-Albersloh (DE); LINDEMANN, Björn, 20459 Hamburg (DE)
(74) Vertreter: Simandi, Claus
(86) Internationale Anmeldenummer: PCT/EP2013/077965
(87) Internationale Veröffentlichungsnummer: WO 2014/096462

(56) Entgegenhaltungen:
- WO-A1-2012/131386
- WO-A2-2009/088930
- DE-A1- 102007 032 493
- KR-A- 20120 133 274
- US-A1- 2006 222 567
- US-A1- 2006 257 993
- LI SHEN ET AL: "Point-of-care colorimetric detection with a smartphone", LAB ON A CHIP, vol. 12, no. 21, 1 January 2012 (2012-01-01), pages 4240, XP055145190, ISSN: 1473-0197, DOI: 10.1039/c2lc40741h
- ANDRES W MARTINEZ ET AL: "Simple Telemedicine for Developing Regions: Camera Phones and Paper-Based Microfluidic Devices for Real-Time, Off-Site Diagnosis", ANALYTICAL CHEMI, AMERICAN CHEMICAL SOCIETY, US, vol. 80, no. 10, 15 August 2008 (2008-08-15), pages 3699 - 3707, XP008148137, ISSN: 0003-2700, [retrieved on 20080411], DOI: 10.1021/AC800112R
- DAVID N. BRESLAUER ET AL: "Mobile Phone Based Clinical Microscopy for Global Health Applications", PLOS ONE, vol. 4, no. 7, 22 July 2009 (2009-07-22), pages e6320, XP055058281, ISSN: 1932-6203, DOI: 10.1371/journal.pone.0006320
- ONUR MUDANYALI ET AL: "Integrated rapid-diagnostic-test reader platform on a cellphone", LAB ON A CHIP, vol. 12, no. 15, 16 April 2012 (2012-04-16), pages 2678, XP055058669, ISSN: 1473-0197, DOI: 10.1039/c2lc40235a

## Beschreibung

Die vorliegende Erfindung betrifft ein Testsystem samt Teststreifen und Testverfahren und dessen Verwendung, insbesondere im Point-of-Care (PoC) Bereich, wobei eine mobile Rechnereinheit aufweisend eine Bildverarbeitungsvorrichtung angeordnet an einer optischen Vergrößerungseinheit zur Analyse von Körperflüssigkeiten verwendet wird.

In der Forschung, Diagnostik, oder einer Vielzahl weiterer Anwendungsfelder stellen analytische Labortests, die zur qualitativen oder/und quantitativen Bestimmung von Zellen, Molekülen, Liganden, Analyten bzw. deren Aktivität oder Zusammensetzung dienen, die Basis für weitreichende Aussagen bis hin zur Entwicklung neuer Verfahren oder Vorrichtungen dar. Die Basis sind die allgemein bekannten Methoden der DNA/RNA Analytik bzw. der Proteinanalytik. Ein weiteres Beispiel sind die Vielzahl von analytischen Verfahren und Methoden, die eingesetzt werden, um die Antikörperreaktionen, sogenannte Immunreaktionen, welche für die Bestimmung von (Bio)Markern und vielen weiteren Substanzen/Analyten eingesetzt werden. Weiterhin sind mikroskopiegestützte Verfahren auf dem Gebiet der Diagnostik beschrieben.

Patientennahe oder "Point-of-Care" (PoC) Testverfahren sind diagnostische Untersuchungen, die nicht in einem Zentrallabor, sondern innerhalb kurzer Zeit vor Ort direkt und individuell am Patienten/Probanden durchgeführt werden können.

Es gibt für einige wenige Parameter PoC-Testsysteme wie immunchromatographische Teststreifen, die über eine Antikörperbindung ein lösliches Biomolekül z.B. ein Hormon oder ein Protein in Blut, Urin oder Speichel mit Hilfe einer Farbreaktion nachweisen. Bekannte PoC-Teststreifen sind beispielsweise Schwangerschaftstests oder Blutgerinnungstests, die mit oder ohne Messgerät angeboten werden. Ferner sind zugehörige Schnelltestverfahren bekannt, wie der Lateral-Flow-Test (LFT), Flow-Through-Test (FTT), Agglutinations-Test (AT) oder Solid-Phase-Test (SPT). Alle diese Verfahren dienen zum schnellen Nachweis von Analyten und sind zur visuellen Auswertung im PoC-Bereich geeignet.

Im PoC-Bereich ist eine robuste und schnelle Diagnostik erforderlich, die den besonderen Bedürfnissen z.B. der Notfallmedizin nachkommen, eine hohe Mobilität und/oder Konnektivität zu medizinisch behandelndem Fachpersonal erfordern.

Es gibt jedoch keine PoC-Tests für eine große Zahl der zum Teil lebensbedrohlichen Erkrankungen, die Gegenstand einer Erreger- oder Zelldiagnostik sind. Hierzu gehören schwere bakterielle Infektionen, die zu einer Sepsis führen können, Erkrankungen wie Malaria, Cholera und Tuberkulose oder zur Quantifizierung bestimmter Blutzellen, z.B. von Lymphozyten, eines Krebspatienten. Für die Erreger- und Zelluntersuchungen ist nach wie vor eine apparativ und personell aufwändige Untersuchung im diagnostischen Labor unumgänglich, die entsprechend zeit- und kostenintensiv ist und zudem einen verzögerten Beginn einer individuell abgestimmten Behandlung oder Therapie verursacht.

Am Beispiel der Malaria ist eine erforderliche Erreger- und Zelldiagnostik erläutert:
Für das Jahr 2010 wurden 216 Millionen Fälle von Malariaerkrankungen aus 106 Ländern gemeldet. In 2010 starben nach Angaben der WHO weltweit 655.000 Menschen an Malaria - der Großteil davon Kinder unter 3 Jahren. Mit weltweit mehr als 90 % wird diese Erkrankung durch den Endoparasiten *Plasmodium falciparum* ausgelöst, wobei die nicht oder nicht ausreichend behandelte Erkrankung in den meisten Fällen tödlich verläuft.

Die Standardmethode zur Diagnose einer Malaria basiert im Stand der Technik auf der Mikroskopie. Es wird eine kleine Menge Blut abgenommen, wovon ein Ausstrich oder ein Präparat als so genannter dicker Tropfen angefertigt und mit Giemsa-Farbstoff gefärbt wird. Nach Fixierung und Trocknung des Präparats kann der Parasit unter dem Mikroskop in den roten Blutkörperchen (Erythrozyten) erkannt und vom Fachmann differenziert werden.

Diese Methode setzt nicht nur einen geschulten Durchführenden, sondern auch ein Laborumfeld und ein teures Mikroskop voraus. In den meisten Malaria-Gebieten ist ein derart ausgestattetes Labor ohnehin nicht vorhanden.

Vorhandene molekularbiologische Tests sind zudem teuer und erfordern ebenfalls tiefergehende Anwenderkenntnisse.

Ebenfalls bekannt sind Lateral-Flow-Schnelltests (supra), die zwar parasitenspezifische Antigene, nicht jedoch den Parasiten als solchen oder befallene Zellen nachweisen können und von daher keine Erreger- oder Zelldiagnostik erlauben.

Von daher sind solche Systeme speziell von Interesse, die eine leistungsfähige mobile Rechnereinheit (z.B. Smartphone) aufweisen, wie z.B. in DE202010007208U1 im Stand der Technik beschrieben. Solche Testsysteme werden beispielsweise zur Bestimmung von Blutzucker verwendet, wobei ein Teststreifen mit Patientenblut z.B. elektrochemisch gemessen wird und einfache Analysen durchgeführt werden. Eine geeignete Erreger- und Zelldiagnostik sind für Testsysteme, die eine mobile Rechnereinheit aufweisen, jedoch nicht beschrieben. Weitere Testsysteme werden beispielsweise durch Mudanyali et al.("Integrated rapid-diagnostic-test reader platform on a cellphone", Lab on a chip, Bd. 12, Nr. 15, 16. April 2012 (2012-04-16), Seite 2678) und US 2006/222567 A1 beschrieben, die jeweils Smartphone-basierte Systeme für unterschiedliche Teststreifen zeigen.

Es besteht jedoch ein hohes Bedürfnis ein Testsystem mit einer mobilen Rechnereinheit bereitzustellen, dass eine komplexe Diagnostik erlaubt.

Die komplexe Diagnostik soll insbesondere eine Erreger- und Zelldiagnostik aus Körperflüssigkeiten ermöglichen.

Daher ist es Aufgabe der vorliegenden Erfindung ein Testsystem bereitzustellen, welches eine effektive Erreger- und Zelldiagnostik aus Körperflüssigkeiten im PoC-Bereich ermöglicht.

Die Aufgabe der vorliegenden Erfindung wird durch das Testsystem gemäß Anspruch 1 gelöst. Weitere Ausgestaltungsformen werden durch die abhängigen Ansprüche definiert.

In einer bevorzugten Ausführungsform ist die optische Vergrößerungseinheit auf den Teststreifen ausgerichtet bzw. angeordnet, so dass eine Abbildung bzw. ein Bild oder Serienbild oder bewegtes Bild (auch Video genannt), vorzugsweise mindestens ein Kontrastbild in Gegenwart des Teststreifens erfolgt und von der Bildverarbeitungsvorrichtung das erlangte Bild erfasst und von der mobilen Rechnereinheit ausgelesen wird.

Weiterhin ist bevorzugt, dass der planare Teststreifen mit einer ersten Oberfläche der optischen Vergrößerungseinheit enthaltend mindestens ein Objektiv, mindestens einem Objektiv zur Objektivachse lotrecht angeordnet ist.

Im Rahmen der vorliegenden Erfindung bedeutet "mobile Rechnereinheit" eine solche Einheit, die beispielsweise durch ein Mobiltelefon mit Rechnerfunktion (im Handel beispielsweise als "Smartphone" erhältlich) oder durch einen Laptop- oder Tablettrechner (im Handel häufig als "Tablet" oder "Tablet-Computer" erhältlich) zur Verfügung gestellt werden, welche besonders bevorzugt bereits eine integrierte Bildverarbeitungsvorrichtung enthalten ("iPod^{®}, iPhone^{®}, Android^{®}, iPad^{®}, Windows^{®} Phone" u.v.a.).

Die mobile Rechnereinheit weist im Wesentlichen eine Zentraleinheit, auch als Prozessor bezeichnet, auf, die alle zur Bildverarbeitung erforderlichen Rechen- und Prozessschritte ausführen kann.

Ferner soll eine Bildverarbeitungsvorrichtung erfindungsgemäß zur mobilen Rechnereinheit angeordnet sein, in Form einer Kamera. Die Bildverarbeitungsvorrichtung wird dazu verwendet, Bilddaten von einer optischen Vergrößerungseinheit zu erfassen. Dies kann durch Abfotografieren des von der optischen Vergrößerungseinheit erzeugten Bildes geschehen. Besonders wenn die optische Vergrößerungseinheit eine für eine Kamera optimierte Optik aufweist, ist dies ein sehr zweckmäßiger Weg. Bevorzugt sind Digitalkameras, also solche mit einem Bildsensor, dessen Daten an ein digitales Speichermedium ausgegeben werden. Der Bildsensor kann ein gängiger CCD-Sensor sein. Ein CMOS-Sensor kann ebenfalls eingesetzt werden, ist jedoch nicht erforderlich. Vor dem Sensor können zweckmäßigerweise Filter platziert sein, beispielsweise ein Infrarot-, ein Tiefpass- und/oder ein Farbfilter.

Das digitale Speichermedium kann der Bildverarbeitungsvorrichtung zugeordnet sein, das heißt physisch an die Optik angrenzend platziert sein und/oder nur von der Bildverarbeitungsvorrichtung erfasste Bilddaten speichern. Es kommt daher in Frage, dass eine Bildverarbeitungsvorrichtung auch in einem separaten Gehäuse untergebracht ist und kabellos oder über Kabel Daten an die mobile Rechnereinheit liefert. Erfindungsgemäß ist die Bildverarbeitungsvorrichtung eine Digitalkamera, die sich in einer mit dem Smartphone oder dem Tablet-Computer verbundenen separaten Einheit befindet. Möglich, aber nicht durch die Ansprüche gestützt, ist auch eine integrierte Lösung, wobei ein Speichermedium eingesetzt werden kann, welches ebenfalls anderen Anwendungen dient. Dies kann zum Beispiel in einem Smartphone der Fall sein, wo Speicherplatz für viele Zwecke vorgesehen ist.

Die Bildverarbeitungsvorrichtung kann in einem Aufnahmemodus für Einzelbilder, Serienbilder oder bewegte Bilder (auch Video) betrieben werden. Bei der Aufnahme von Serienbildern werden nach einer Auflösung mehrere Bilder in einem festen Zeitabstand, beispielsweise fünf Bilder in einem Zeitabstand von einer Sekunde, aufgenommen. Aufgrund einer solchen Bildserie lassen sich Veränderungen des Bildobjektes gut erkennen. Wenn angenommen werden kann, dass sich das Objekt nicht verändert, kann ein Vergleich der verschiedenen Bilder dazu dienen, die Bildqualität zu erhöhen.

Im Rahmen der vorliegenden Erfindung ist eine Bildverarbeitung grundsätzlich vorgesehen. Hierzu muss ein Speichermedium für Bilddaten und ein Prozessor zur Verfügung gestellt werden. Aktuelle Smartphones als mobile Rechnereinheit sind beispielsweise mit ausreichenden Prozessoren ausgestattet, häufig schon mit vier Prozessorkernen (Quad-Core), was wünschenswert, aber nicht erforderlich ist. Für den Prozessor ist eine Taktrate von mehr als 0,5 GHz wünschenswert. Dies wird ebenfalls durch aktuelle Smartphones oder Tablet-Computer (supra) erreicht.

Zur erfindungsgemäßen Verarbeitung der Bilddaten ist ein Bildverarbeitungsprogramm erforderlich. Es ist möglich, aber meist nicht erforderlich, alle vom Programm durchzuführenden Operationen eigens zu programmieren. Es kommt daher in Betracht, eine umfangreiche Bildverarbeitungssoftware einzusetzen, welche die Anpassung an die Erfordernisse der Erfindung erlaubt, beispielsweise durch frei programmierbare Routinen. Insbesondere Smartphones bieten Betriebssysteme, die das Programmieren und den Einsatz von kleinen, auf eine Funktion hin optimierten Programmen erlauben ("Apps"). Grundfunktionen des Programmes (etwa die Handhabung von Daten) können in solchen Betriebssystemen mit sehr kleinem Programmieraufwand angelegt werden. Daher sind solche Apps besonders geeignet, die die Bildverarbeitung im Rahmen der vorliegenden Erfindung übernehmen.

Die Bildverarbeitung ist gegebenenfalls auf einen Analysemodus hin auszulegen. Es kommt erfindungsgemäß nicht darauf an, einzelne Strukturen eines Bildes genau und scharf darzustellen und/oder zu analysieren, sondern vielmehr darauf, summarisch Farbwerte oder Farbkontraste, vorzugsweise Fluoreszenzfarben, in einem Bildausschnitt zu erfassen. Die Erfassung kann dabei qualitativ sein, ist jedoch in der Regel auch quantitativ. Im Rahmen einer einfachen quantitativen Auswertung kann beispielsweise ausgesagt werden, ob ein festgelegter kritischer Wert von eingefärbten Bereichen überschritten wird. Die Bildauswertung kann vorzugsweise integrativ geschehen, indem die Summe oder das Integral bestimmter Farbwerte oder Farbkontraste relativ zu allen anderen Werten im Bildausschnitt berechnet wird. Bei den bestimmten Farbwerten oder Farbkontrasten handelt es sich zweckmäßigerweise um ein enges Intervall von Farbwerten, es kann sich jedoch im Einzelfall ebenfalls um einen einzelnen Farbwert handeln. Solche Farbwerte können auf einer üblichen Farbskala, beispielsweise einer RAL-Skala, festgelegt werden, bzw. das Vorgehen erlaubt die Ermittlung von Farbkontrasten bzw. von relativen Farbkontrasten, ggfs. im Sinne eines Verhältnisses einer oder mehrerer Farbwerte. Von daher wird im Rahmen dieser Erfindung im weitesten Sinne synonym von Farbwerten und Farbkontrasten gesprochen.

Die Qualität der Bildverarbeitung lässt sich erhöhen, indem nacheinander einzelne Bildausschnitte eines größeren Feldes untersucht werden. Dies kann durch reine Auswahl in der Bildverarbeitung geschehen. Dies kann alternativ oder zusätzlich auch durch optische Vergrößerung jeweils eines Bildausschnittes geschehen ("zoomen"). Dies kann alternativ oder zusätzlich ebenfalls durch mechanische Bewegung der Probe relativ zur erfindungsgemäß ausgelegten Optik, wie oben beschrieben, geschehen (siehe unten: "dynamische Methode"). Ein Vorbeifließen oder Transport der Probe bzw. Teststreifens relativ zur erfindungsgemäß ausgelegten Optik ist besonders bevorzugt. Dies erlaubt vorteilhaft eine vollständige Erfassung einer erfindungsgemäßen Probe zur Bildverarbeitung.

Die Bildverarbeitung kann unmittelbar vorteilhaft während dieses Transports geschehen, oder während des Transports können Bildserien (auch: Video) aufgenommen werden, die anschließend ausgewertet werden.

Im Rahmen der Bildauswertung kann auch eine Qualitätsanalyse durchgeführt werden. Dabei kann die Standardabweichung der Ergebnisse in mehreren Bildausschnitten errechnet werden. Es kann alternativ oder zusätzlich auch ermittelt werden, wie nahe ein berechneter Wert an einem kritischen Wert liegt. Bei großer Nähe oder bei großer Standardabweichung wird auf die schlechte Qualität der Messung hingewiesen. Darüber hinaus kann auch zu einem neuen Test aufgefordert werden.

Zur Nutzung der vorliegenden Erfindung ist folglich ein Programm auf einer Rechnereinheit, beispielsweise als App auf einem Smartphone nützlich, in dem folgende Grundfunktionen vereint werden: Einlesen von Bilddaten, Bildverarbeitung, quantitative und/oder qualitative Ausgabe eines Bildverarbeitungs- und/oder Analyseergebnisses. Zusätzlich kann das Programm eine Qualitätsanalyse bezogen auf die Qualität der Analyse einer Probe anbieten. Ferner kommt die Verknüpfung mit weiterführenden Informationen in Betracht (internen oder externen Datenbanken zu Krankheitsbildern, Adressen von medizinischen Diensten und dergleichen). Die Verknüpfung von solchen Informationen kann vom Analyseergebnis abhängig gemacht werden.

Die erfindungsgemäße mobile Rechnereinheit verfügt vorzugsweise über mindestens eine Datenanbindung, vorzugsweise auch in der Form einer Internetanbindung. Mittels dieser Anbindung können Daten auch ganz oder zum Teil außerhalb der mobilen Rechnereinheit gespeichert werden (sie müssen dabei einem einzelnen Rechner nicht klar zugeordnet sein und können einem externen serverbasierten Speicher, z.B. in einer "Cloud" abgelegt werden). Es können Rechneroperationen über andere Rechner ausgeführt werden (hierbei kann die Rechnerleistung ebenfalls über ein geeignetes Netzwerk verfügbar sein und somit nicht vom ausgesuchten und dauerhaft bestimmten Rechner erbracht werden). Die Datenanbindung, und insbesondere die Internetanbindung, kann kabelgebunden oder kabellos erfolgen, sie kann z.B. über ein W-LAN Protokoll oder auch über ein Datennetz nach dem UMTS- oder LTE-Standard erfolgen.

Die mobile Rechnereinheit soll ferner über Eingabemöglichkeiten verfügen, beispielsweise eine Tastatur oder einen Touchscreen. Zur Datenausgabe genügt häufig ein kleiner Bildschirm (etwa mit einer Diagonalen zwischen fünf und zehn Zoll). Dort können auch Hinweise gegeben werden, ob die aufgenommenen Bilddaten ausreichend gut sind, so dass erforderlichenfalls umgehend ein neues Bild aufgenommen werden kann.

Erfindungsgemäß ist dass die mobile Rechnereinheit ein Smartphone oder Tablet-Computer ist und die Bildverarbeitungsvorrichtung eine Digitalkamera ist, die sich in einer mit dem Smartphone oder dem Tablet-Computer verbundenen separaten Einheit befindet.

Im Rahmen dieser Erfindung bedeutet "optische Vergrößerungseinheit" eine Einheit, die mindestens ein Objektiv oder eine Anordnung von einem oder mehreren Objektiven oder Linsen enthält, wie bei einem Mikroskop, die eine hinreichende Vergrößerung erlauben. Dies kann geschehen, indem die Kamera mit einem handelsüblichen Mikroskop verbunden wird. Wenn ein solches Mikroskop zum Einsatz kommt, können alternativ auch Bilddaten direkt an die Rechnereinheit übermittelt werden. Im Rahmen der vorliegenden Erfindung ist jedoch der Einsatz eines Mikroskops in der Regel nicht zwingend erforderlich. Die Kamera, beispielsweise eines Smartphones, kann mit einer Vergrößerungsoptik kombiniert werden. Eine solche Option fällt jedoch nicht unter die Ansprüche. Erfindungsgemäß ist nämlich die Bildverarbeitungsvorrichtung eine Digitalkamera, die sich in einer mit dem Smartphone oder dem Tablet-Computer verbundenen separaten Einheit befindet.

Erfindungsgemäß bevorzugt sind Leistungen der erfindungsgemäßen optischen Vergrößerungseinheit in Gegenwart der Bildverarbeitungsvorrichtung mit Vergrößerungen von mindestens 10-fach oder 100-fach oder mindestens 1000-fach, vorzugsweise 10-fach bis 500-fach, 100-fach bis 2000-fach, insbesondere 500-fach bis 1000-fach, ggfs. mit einer Auflösung von kleiner als 0,5 µm, so dass eine hinreichende Vergrößerung von Zellen und Erregern erreicht werden kann. Dieser Vergrößerungsfaktor kann fest oder variabel sein.

Die optische Vergrößerungseinheit oder Bildverarbeitungsvorrichtung weist eine Fluoreszenzbeleuchtung auf, welche als Anregungslicht für Fluoreszenzfarbstoffe (siehe unten) verwendet wird.

Der Begriff "Mittel zur Aufnahme eines Teststreifens aufweisend eine Körperflüssigkeit" bedeutet, dass mittels einer Kammer aufweisend einen Slot oder Einschub oder eine Halterung ein Teststreifen zu der optischen Vergrößerungseinheit angeordnet und fixiert werden kann, insbesondere in der Weise, dass die Bildverarbeitungsvorrichtung samt mindestens einer optischen Vergrößerungseinheit eine optische Auslesung (read-out) der Körperflüssigkeit erlaubt.

Daher betrifft die Erfindung ebenfalls einen Teststreifen, der für die Aufnahme in das Testsystem geeignet ist, wobei der Teststreifen in einer Kammer aufgenommen wird und lediglich für den Lichtweg der optischen Vergrößerungseinheit eine Öffnung neben einem Slot oder Einschub oder eine Halterung aufweist.

In einer Variante kann die Kammer aufklappbar und verschließbar sein, so dass der Teststreifen im Wege der Aufnahme abgelegt oder gehaltert werden kann (nachstehend: statische Methode).

Bevorzugt ist jedoch ein Slot oder Einschub an der Kammer, so dass eine Aufnahme des Teststreifens mittels Einschieben und eine Entnahme mittels Ausschieben erfolgen kann (nachstehend: dynamische Methode). Der Teststreifen kann daher relativ zu der erfindungsgemäßen Optik bewegt bzw. transportiert werden (supra).

Ein solcher Teststreifen ist erfindungsgemäß vorzugsweise ein planarer Teststreifen, vorzugsweise bestehend aus einem oder mehreren transparenten, harten Material(ien), wie einem Kunststoff oder Glas, der in der Lage ist eine Körperflüssigkeit aufzunehmen. Weiterhin ist bevorzugt, dass der Teststreifen aus zwei aufeinander geklebten Schichten besteht, wie z.B. einem dünnen Deckglas und einem Kunststoffstreifen. Eine synonyme Bezeichnung für Teststreifen kann z.B. Chip sein.

Der Teststreifen besitzt einen Proben-Port, vorzugsweise als Napf oder Trichter eingelassen, für die Applikation eines definierten Volumens (z.B. 25 µl, 50 µl, 100 µl) einer Körperflüssigkeitsprobe von einem Probanden, insbesondere Patienten.

Im Rahmen dieser Erfindung bedeutet "Körperflüssigkeit" nicht abschließend Blut, Vollblut, Urin, Speichel (Sputum), Synovialflüssigkeit, Liquor, Liquor cerebrospinalis, Plasma oder Serum oder Tränenflüssigkeit, Schweiß, Lymphflüssigkeit, Interzellularflüssigkeit.

Eine Probe einer Körperflüssigkeit eines Patienten/Probanden kann mit beliebigen Chemikalien, Reagenzien, insbesondere Färbemitteln und Farbstoffen, insbesondere Fluoreszenzfarbstoffen, ggfs. samt üblichen Hilfs- und Zusatzstoffen behandelt werden.

Solche Körperflüssigkeiten enthalten Analyten, insbesondere Zellen, die ggfs. infizierte Zellen (supra) oder Erreger als solche enthalten können.

"Erreger" im Sinne dieser Erfindung können z.B. nicht abschließend Bakterien, Pilze, Viren und eukaryotische Einzeller wie z.B. Amöben oder eukaryotische Parasiten sein. Ferner sind unter "Erreger" Krankheitserreger oder Pathogene zu verstehen, nicht anschließend solche wie, Adenoviren, Bacillus anthracis, Bordetella pertussis, Bordetella parapertussis, Borrelia recurrentis, Brucella sp., Campylobacter sp., Chlamydia psittaci, Clostridium botulinum, Corynebacterium diphtheriae, Coxiella burnetii, humanpathogene Cryptosporidium sp., Ebolavirus, Escherichia coli, enterohämorrhagische Stämme (EHEC), Francisella tularensis, FSME-Virus, Gelbfiebervirus, Giardia lamblia, Haemophilus influenzae, Hantaviren, Hepatitis-A-Virus, Hepatitis-B-Virus, Hepatitis-C-Virus, Hepatitis-D-Virus, Hepatitis-E-Virus, Influenzaviren, Lassavirus, Legionella sp., humanpathogene Leptospira sp., Listeria monocytogenes, Marburgvirus, Masernvirus, Mumpsvirus, Mycobacterium leprae, Mycobacterium tuberculosis/africanum, Mycobacterium bovis, Neisseria meningitidis, Norwalk-ähnliches Virus, Poliovirus, Pseudomonas aeruginosa, Rabiesvirus, Rickettsia prowazekii, Rotavirus, Rubellavirus, Salmonella Paratyphi, Salmonella Typhi, Shigella sp., Trichinella spiralis, Varizella-Zoster-Virus, Vibrio cholerae O 1 und O 139, Yersinia enterocolitica, Yersinia pestis, Treponema pallidum, HIV, Echinococcus sp., Plasmodium sp., Toxoplasma gondii. Weiterhin erfindungsgemäß umfasst sind multiresistente pathogene Bakterien (MRSA), wie Streptococcus pneumoniae, Streptococcus aureus u.a.

Der Begriff "Analyten" umfasst nicht abschließend Substanzen, chemische Stoffe, solche wie gelöste Makromoleküle (Viren, Nukleinsäuren, Proteinkomplexe, Proteine, Peptide) oder auch kleine Moleküle (organische Moleküle, Hormone, Vitamine, Metabolite, Drogen) u.a.

Der Begriff "Patient" umfasst einen jeden Probanden, unabhängig von einer Symptomatik oder Krankheit und zwar Mensch und Tier, insbesondere Säugetier.

Der Proben-Port kann mit (eingetrockneten) Chemikalien, Agenzien, Hilfsmitteln (z.B. EDTA, Heparin zur Gerinnungshemmung) versehen werden, insbesondere Farbstoffen zur histologischen Zellfärbung oder besonders bevorzugt Mittel zur Lyse von infizierten Zellen (z.B. infizierte Erythrozyten nach Infektion mit Plasmodium), ggfs. unter Freisetzung der Erreger (z.B. mittels Ammoniumchlorid, Saponin, Sucrose, u.a.), die vorzugsweise durch die aufgegebene Probe einer Körperflüssigkeit gelöst werden (nachstehend: Probe).

Die Probe durchfließt in einer bevorzugten Ausführungsform den Teststreifen, insbesondere vorzugsweise mittels mindestens eines eingearbeiteten oder aufgebrachten (Mikro)Kanals mit einem rechteckigen, trapezförmigen oder bogenförmigen Querschnitt. Der Kanal kann eine Kapillare sein oder einen Durchfluss durch Schwerkrafteinwirkung erlauben. Bevorzugt besteht der (Mikro)Kanal aus einem optisch durchlässigen Material wie Glas oder einem Kunststoff, vorzugsweise einem Fluoropolymer mit einem ähnlichen gleichen Brechungsindex wie Wasser, um eine optische Detektion zu ermöglichen.

Daher betrifft die Erfindung ebenfalls einen Teststreifen, der einen Proben-Port und mindestens einen (Mikro)Kanal enthält, insbesondere mindestens eine Kapillare.

In einer bevorzugten Ausführungsform enthält der Proben-Port eine erste trichterförmige Vertiefung (10), in die ein oder mehrere Tropfen Kapillarblut gegeben werden. Dieser erste Trichter ist in einem unteren Bereich in mehrere, vorzugsweise drei untergeordnete Kompartimente (20, 30, 40) unterteilt, beispielsweise mittels geeigneter Trennstege (50). Die angeordneten Trennstege (50) definieren jeweils die Größe der Kompartimente (20, 30, 40) und folglich das auf die Kompartimente entfallende Teilvolumen.

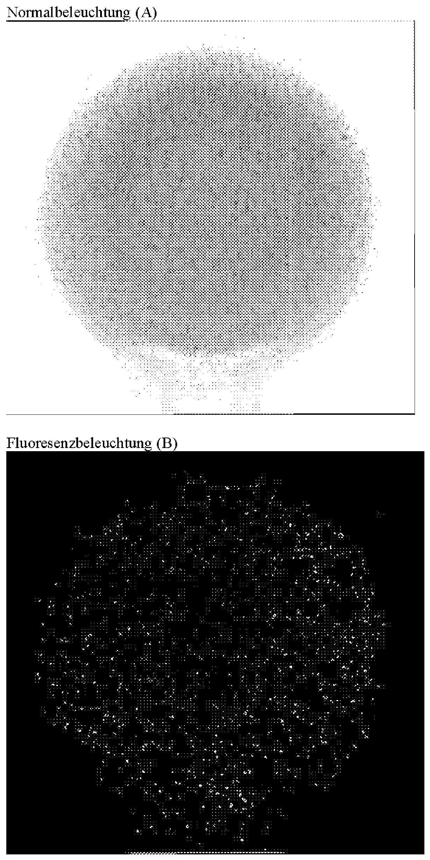

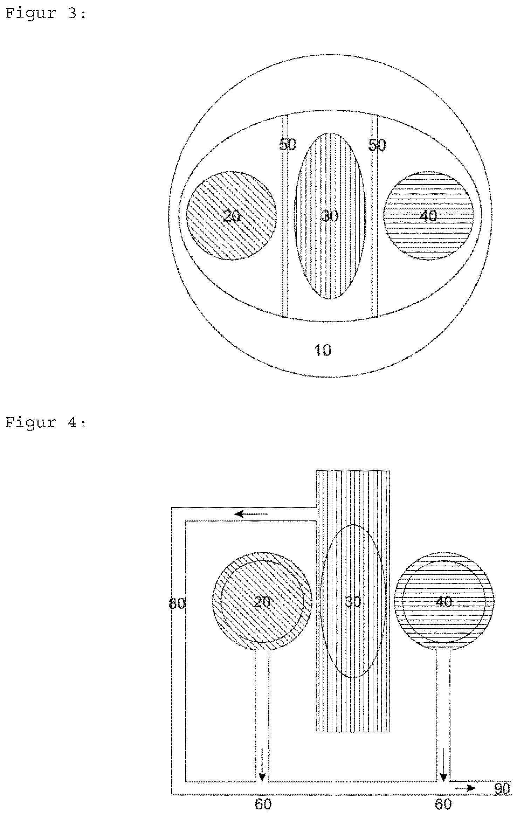

Daher betrifft die Erfindung einen Teststreifen enthaltend einen Proben-Port, wobei eine erste trichterförmige Vertiefung (10), in mehrere Kompartimente (20, 30, 40) unterteilt ist. Die Kompartimente (20, 30, 40) weisen jeweils eine Öffnung vorzugsweise samt Zellfilter ("Blutfilter") auf, die in einen gemeinsamen Verbindungskanal (90) münden, wobei jedoch die Kompartimente (20, 30, 40) unterschiedliche Weglängen zur Detektionskammer (110) aufweisen und hintereinander angeordnet sind (siehe Figur 4). Mindestens ein Kompartiment (20) enthält eine vorgelegte, vorzugsweise eingetrocknete Färbelösung, ggfs. samt Binder und weiteren Hilfsmitteln, insbesondere Mittel zur Lyse von infizierten Zellen (z.B. infizierte Erythrozyten nach Infektion mit Plasmodium). Das größte Kompartiment (30) ist vorzugsweise mittig zu den Kompartimenten (20), (40) ausgestaltet und erlaubt die Zuführung von Körperflüssigkeit in definierter Menge in die Kompartimente (20), (40) (siehe Figur 4).

Die besagten Zellfilter ("Blutfilter") erlauben ein Zurückhalten von größeren Blutzellen, jedoch ein Durchlassen der Erreger.

Die die Erreger enthaltende Flüssigkeit aus (40) gelangt auf Grund von Kapillarkräften (Kapillarsog) über den Verbindungskanal (90) in den (Mikro)Kanal oder Detektionsraum (110).

Infolgedessen bildet sich an der Einmündung (60) aus der Zuleitung von (40) an dem Verbindungskanal (90) eine Luftblase, welche zum einen die Flüssigkeiten aus (40) und (20) trennt und zum anderen den Fluss aus (20) stoppt und zwar bis das Reservoir (40) geleert ist. Anschließend kann der Flüssigkeitspegel in (20) die Luftblase in den von (40) kommenden Kanal drücken, so dass die Färbelösung in den Verbindungskanal (90) zum anschließenden (Mikro)Kanal oder Detektionsraum (110) zeitlich versetzt fließt.

Daher betrifft die Erfindung einen Teststreifen enthaltend einen Proben-Port, wobei eine erste trichterförmige Vertiefung (10), in mehrere Kompartimente (20, 30, 40) unterteilt ist, und eine Probe nach Trennung über einen gemeinsamen Verbindungskanal (90) unvermischt und sequentiell in einen (Mikro)Kanal führt.

Dies erlaubt vorteilhaft eine definierte Aliquotierung der Probe samt Einsatz von Färbelösungen und Hilfsmitteln. Besonders vorteilhaft ist die gewährleistete Reproduzierbarkeit der Testergebnisse.

Daher betrifft die Erfindung einen Teststreifen enthaltend einen Proben-Port, wobei eine erste trichterförmige Vertiefung (10), in mehrere Kompartimente (20, 30, 40) unterteilt ist, wobei die Kompartimente (20, 30, 40) Öffnungen aufweisen und eine Probe über einen gemeinsamen Verbindungskanal (90) in einem ersten Schritt die Erreger aus einem Kompartiment in den (Mikro)Kanal bzw. Detektionsraum (110) eintreten und in einem zweiten Schritt eine Färbung der (gebundenen) Erreger aus einem Färbemittel eines zweiten Kompartiments erfolgt.

Die Figuren 3 bis 5 zeigen eine bevorzugte Ausführungsform eines mikrostrukturierten Proben-Ports (Probenaufnahme) für einen oder mehrere Tropfen Körperflüssigkeit, wie z.B. Kapillarblut, wie vorstehend ausgeführt.

Der Teststreifen kann ein oder mehrere Felder aufweisen, in denen spezifische Binder (130), wie z.B. Antikörper, Liganden, Proteine bzw. Aptamere, vorzugsweise in Form einer Monolage an einer ersten Oberfläche des Teststreifens gebunden sind.

Diese Felder samt Binder erlauben vorteilhaft Multiplex-Analysen, also von verschiedenen Zellen, infizierten Zellen, Erregern nebeneinander.

Solche Binder sind dem Fachmann zugänglich und beispielsweise kommerziell erhältlich.

Beispielsweise für Streptococcus pneumoniae kann als Target für einen spezifischen Binder isoliertes C-Polysaccharid oder das Oberflächenprotein PspA des Erregers dienen. Das Gen für das Oberflächenprotein PspA ist unter der NCBA Gene ID 932894 öffentlich zugänglich. Aus dieser Gensequenz kann mit Standardverfahren ein Protein hergestellt werden, das als Target zur Isolierung eines Binders der oben angegebenen Arten dient. RNA-Binder können mithilfe der SELEX-Methode (systematic evolution of ligands by exponential enrichment) isoliert werden. SELEX ist ein Verfahren zur Isolierung von Liganden mit hoher Affinität für ein Target-Protein aus einem Pool variierender DNA- oder RNA-Sequenzen (Molekülbibliothek).

Die mittels der SELEX gewonnenen Oligonukleotid-Sequenzen werden als Aptamere bezeichnet (Übersicht: Ellington AD, Szostak JW, Selection in vitro of single-stranded DNA molecules that fold into specific ligand-binding structures, in Nature, 355 (1992), 850-852).

Hierfür werden auf einem DNA- Synthesizer DNA-Moleküle mit variabler Sequenz, d.h. eine große Population verschiedener DNA-Varianten erzeugt. Diese randomisierten DNA-Sequenzen sind flankiert von definierten DNA-Abschnitten, die durch vorgegebene PCR-Primer erkannt werden. Einer dieser definierten Abschnitte enthält die Signalsequenz zur Initiation der Transkription durch T7 RNA-Polymerase. Typischerweise werden für einen SELEX-Durchgang etwa 1015 bis 1045 verschiedene DNA-Sequenzen erzeugt.

Die Inkubation zwischen den Nukleotid-Sequenzen und den Targets kann im immobilisierten Zustand oder in Lösung stattfinden. Durch Waschschritte werden die an den Targets nur schwach oder gar nicht gebundenen Sequenzen von den gebundenen Sequenzen abgetrennt.

Anschließend erfolgt die Amplifikation der besseren Binder mithilfe einer reverse Transkription (nur bei RNA) und Polymerase-Kettenreaktion (PCR). Daraus entsteht ein Pool von DNA bzw. RNA-Molekülen mit - im Vergleich zum ursprünglichen Molekülpool - verbesserten Bindungseigenschaften zum Liganden. Mit diesem Schritt schließt sich der Kreislauf und wird nun für gewöhnlich acht bis zwölfmal wiederholt, bis ein gewünschtes Aptamer erhalten wird.

Die Sequenz des derart gefundenen Aptamers lässt sich mit Standardmethoden bestimmen und ermöglicht die Herstellung des Aptamers in großen Mengen.

Es stehen von verschiedenen Herstellern angebotene, kommerzielle Antikörper gegen PspA zur Verfügung, zum Beispiel Ziege-anti-S. pneumoniae-Antikörper bN-18 oder bF-19 der Firma Santa Cruz Biotechnology Inc.

Der spezifische Binder kann daher z.B. ein Nukleinsäure-Aptamer, eine PNA-Sequenz, ein monoklonaler Antikörper, eine Antikörperfragment oder ein Affibody (Gebauer M, Skerra A: Engineered protein scaffolds as next-generation antibody therapeutics. In: Curr Opin Chem Biol. Juni 2009) sein.

Selbstverständlich kann für andere Erreger erfindungsgemäß entsprechend vorgegangen werden, wie im Folgenden exemplarisch dargelegt:
Z.B. im Fall von Staphylococcus aureus (Bakterium) kann als Target für einen spezifischen Binder isoliertes Oberflächen-Antigen B, Enterotxin B oder das Mangan-Transporter-Protein MntC des Erregers dienen. Kommerzielle Antikörper sind ebenfalls verfügbar, zum Beispiel die monoklonalen Maus-anti-S. aureus-Antikörper Klone S622 und S643 der Firma Santa Cruz Biotechnology Inc.
Z.B. im Fall von Pseudomonas aeruginosa (Bakterium) kann als Target für einen spezifischen Binder isoliertes mucoidales Exopolysaccharid des Erregers dienen. Kommerzielle Antikörper gegen die Serotypen 9 bzw. 10 von P. aeruginosa sind ebenfalls verfügbar, zum Beispiel Maus-anti-P. aeruginosa-Antikörper Klon 276/11 oder 95/159 der Firma Santa Cruz Biotechnology Inc.
Z.B. im Fall von Haemophilus influenzae (Bakterium) kann als Target für einen spezifischen Binder pneumococcale Histidintriade D (PhtD), das Pneumolysin-Toxoid (dPly) oder das NTHi Protein D (PD) des Erregers dienen. Kommerzielle Antikörper sind ebenfalls verfügbar, z.B. monoklonale Maus-anti- H. influenzae -Antikörper der Firma antibodies-online Inc.
Z.B. im Fall von Mycobacterium tuberculosis (Bakterium) kann als Target für einen spezifischen Binder Oberflächen-Antigen PE_PGRS16 des Erregers dienen. Kommerzielle Antikörper gegen M. tuberculosis sind ebenfalls verfügbar, z.B. polyklonale Kaninchen-anti-M. tuberculosis-Antikörper der Firma abcam plc.
Z.B. im Fall von Neisseria gonorrhoeae (Bakterium) kann als Target für einen spezifischen Binder Oberflächen-Antigens Omp85 (GenBank: AAC17600.1) des Erregers dienen. Kommerzielle Antikörper gegen N. gonorrhoeae sind ebenfalls verfügbar, z.B. polyklonale Kaninchen-anti-N. gonorrhoeae-Antikörper der Firma antibodies-online Inc.
Z.B. im Fall von Corynebacterium diphtheriae (Bakterium) kann als Target für einen spezifischen Binder Oberflächen-Antigens Proteine DIP1281 oder SpA des Erregers dienen. Kommerzielle Antikörper gegen C. diphtheriae sind ebenfalls verfügbar, z.B. monoklonale Maus-anti- C. diphtheriae -Antikörper der Firma antibodies-online Inc.
Z.B. im Fall von Bordetella pertussis (Bakterium) kann als Target für einen spezifischen Binder LOS-A oder der zur Anheftung an das Flimmerepithel notwendigen spezifischen Adhesine durch selektierte Aptamere des Erregers dienen. Kommerzielle Antikörper gegen B. pertussis sind ebenfalls verfügbar, z.B. monoklonale Maus-anti- B. pertussis - Antikörper der Firma antibodies-online GmbH.
Z.B. im Fall von Salmonella enterica (Serovar Typhi) (Bakterium) kann als Target für einen spezifischen Binder nichtfimbriale Protein SiiE des Erregers dienen. Kommerzielle Antikörper gegen S. enterica sind ebenfalls verfügbar, z.B. monoklonale Maus-anti- S. enterica -Antikörper der Firma antibodies-online Inc.
Z.B. im Fall von Yersinia pestis (Bakterium) kann als Target für einen spezifischen Binder Adhesin Ail, Plasminogen Aktivator (Pla) oder pH 6 Antigen (Psa) des Erregers dienen. Kommerzielle Antikörper gegen Y. pestis sind ebenfalls verfügbar, z.B. monoklonale Maus-anti- Y. pestis -Antikörper der Firma abcam plc.
Z.B. im Fall von Campylobacter jejuni (Bakterium) kann als Target für einen spezifischen Binder FlhF-Protein des Erregers dienen. Kommerzielle Antikörper gegen C. jejuni sind ebenfalls verfügbar, z.B. monoklonale Maus-anti- C. jejuni -Antikörper der Firma abcam plc.
Z.B. im Fall von Legionella pneumophila (Bakterium) kann als Target für einen spezifischen Binder PAL Protein oder andere Bestandteile der bakteriellen Lipopolysaccharidschicht des Erregers dienen. Kommerzielle Antikörper gegen L. pneumophila sind ebenfalls verfügbar, z.B. monoklonale Maus-anti- L. pneumophila -Antikörper der Firma antibodies-online Inc.
Z.B. im Fall von Listeria monocytogenes (Bakterium) kann als Target für einen spezifischen Binder Autolysin des Erregers dienen. Kommerzielle Antikörper gegen L. monocytogenes sind ebenfalls verfügbar, z.B. polyklonale Kaninchen-anti- L. monocytogenes -Antikörper der Firma antibodies-online Inc.
Z.B. im Fall von Hepatitis B-Virus kann als Target für einen spezifischen Binder PreS1 (ein spezifisches Hüllprotein) des Erregers dienen. Kommerzielle Antikörper gegen HBV sind ebenfalls verfügbar, z.B. monoklonale Maus-anti- HBV - Antikörper der Firma antibodies-online Inc.
Z.B. im Fall von Hepatitis C-Virus kann als Target für einen spezifischen Binder E1-E2-Dimer der viralen Hülle des Erregers dienen. Kommerzielle Antikörper gegen HCV sind ebenfalls verfügbar, z.B. monoklonale Maus-anti- HCV -Antikörper der Firma antibodies-online Inc.
Z.B. im Fall von Japanese Encephalitis Virus kann als Target für einen spezifischen Binder Domäne II des Hüllproteins (E) des Virions des Erregers dienen. Kommerzielle Antikörper gegen Japanese Encephalitis Virus sind ebenfalls verfügbar, z.B. monoklonale Maus-anti-Japanese Encephalitis Virus -Antikörper der Firma antibodies-online Inc.
Z.B. im Fall von Candida albicans (Pilz) kann als Target für einen spezifischen Binder Polysaccharide der Zellwand des Erregers dienen. Kommerzielle Antikörper gegen C. albicans sind ebenfalls verfügbar, z.B. monoklonale Maus-anti- C. albicans -Antikörper der Firma antibodies-online Inc.
Z.B. im Fall von Aspergillus fumigatus (Pilz) kann als Target für einen spezifischen Binder Protein Cfr1 des Erregers dienen. Kommerzielle Antikörper gegen A. fumigatus sind ebenfalls verfügbar, z.B. monoklonale Maus-anti- A. fumigatus -Antikörper der Firma antibodies-online Inc.
Z.B. im Fall von Plasmodium falciparum (Bakterium) kann als Target für einen spezifischen Binder Protein MSP-1 (Merozoite surface protein), Protein AMA1 (apical membrane antigen 1) oder Protein EMP1 (auch: PfEMP1/knob) des Erregers dienen. Kommerzielle Antikörper gegen P. falciparum sind ebenfalls verfügbar, z.B. monoklonale Maus-anti- P. falciparum - Antikörper der Firma Santa Cruz Biotechnology Inc.
Z.B. im Fall von Plasmodium vivax (Bakterium) kann als Target für einen spezifischen Binder Circumsporozoite (CSP) Protein des Erregers dienen. Kommerzielle Antikörper gegen P. vivax sind ebenfalls verfügbar, z.B. monoklonale Maus-anti- P. vivax -Antikörper der Firma Santa Cruz Biotechnology Inc.

Der Fachmann ist daher in der Lage für die jeweiligen Zellen, infizierten Zellen oder Erreger geeignete Binder, vorzugsweise polyklonale oder monoklonale Antikörper, Aptamere, bereitzustellen.

Daher betrifft die Erfindung ein Testsystem gemäß Anspruch 1. Weitere Ausführungsformen sind durch die abhängigen Ansprüche definiert.

Solche Binder können beispielsweise aufgedruckt, fixiert oder immobilisiert werden und dienen als Fänger für die Zellen, infizierten Zellen, Erreger, die folglich aus der Probe(nflüssigkeit) auf der Oberfläche des Teststreifens angereichert werden.

Wie bereits dargelegt weist der Teststreifen vorzugsweise mehrere Felder mit gleichen oder verschiedenen Bindern (Fänger) auf. Verschiedenen Feldern können unterschiedliche Binder (Fänger) zugewiesen werden, die jeweils spezifisch Zellen, infizierten Zellen, Erreger anreichern.

Der besagte (Mikro)Kanal verläuft vorzugsweise durch die Felder, wobei die Körperflüssigkeitsprobe mit den Bindern auf den Feldern in Kontakt treten kann.

Um einen laminaren Fluss der Zellen auf dem Teststreifen oder durch den besagten Kanal zu verhindern und die Kontaktwahrscheinlichkeit zu den Bindern bzw. Binderbeschichteten Feldern zu erhöhen, können im Kanal bzw. auf dem Teststreifen störende Strukturen zur Verwirbelung angebracht sein, die als runde, ovale, dreieckige, quadratische, rechteckige, mehreckige Erhebungen bevorzugt quer zur Strömungsrichtung stehen.

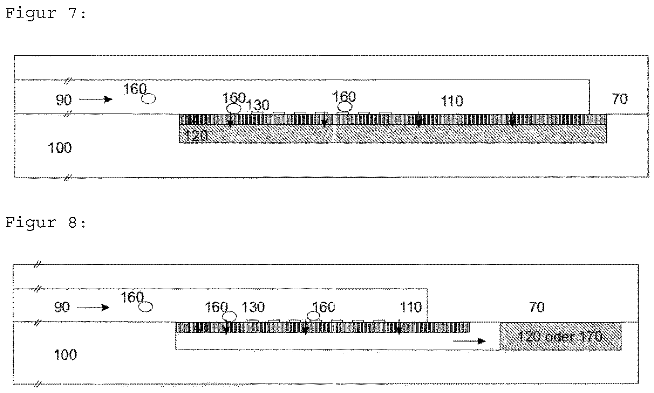

Weiterhin kann der Teststreifen eine (nano)poröse Membran (140) (Porengröße 50 bis 400 nm) enthalten, die einen zusätzlichen Abfluss erzeugt und folglich die Zellen, infizierten Zellen oder Erreger (160) auf den Teststreifen bzw. Felder zu den Bindern (Fänger) (130) ziehen. Zur Herstellung eines hinreichenden Kapillarflusses kann der Teststreifen eine Kapillarpumpe (170) aufweisen. Alternativ kann ebenfalls ein Filterpapier, Vlies oder dergleichen (120) unterseitig oder nebengeordnet verwendet werden. Bevorzugte Ausführungsformen sind in den Figuren 7 und 8 dargelegt.

Daher betrifft die Erfindung einen vorstehenden Teststreifen enthaltend eine (nano)poröse Membran (140) (Porengröße 50 bis 400 nm), und optional eine Kapillarpumpe (170) oder Filterpapier, Vlies (120).

In einer weiteren Ausführungsform kann der (Mikro)Kanal mit einem elektrischen Feld ausgestattet sein, wobei das Feld vorzugsweise im rechten Winkel zur Oberfläche des Teststreifens ausgerichtet ist. Folglich können geladene Erreger zumeist in Richtung der Binder (130) gelenkt werden. Das elektrische Feld kann mittels üblicher Elektroden und hinreichender Feldstärke entlang des Teststreifens und / oder dem (Mikro)Kanal angelegt sein.

Die Binder erkennen die gesuchten Zellen, infizierten Zellen oder Erreger anhand spezifischer Targets, wie Oberflächenmarker o.a., fangen sie aus dem Probenfluss und binden, fixieren oder immobilisieren sie an eine erste Oberfläche des Teststreifens oder ausgewiesenes Feld.

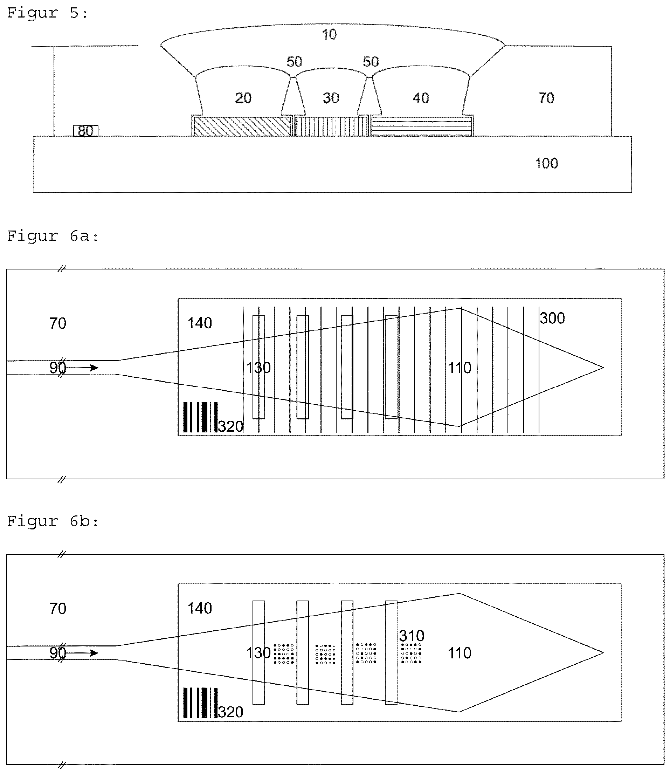

In einer besonderen Ausführungsform des erfindungsgemäßen Teststreifens können zwischen den Feldern vorzugsweise orthogonal zur Fließrichtung Balken, Markierungen (300) (siehe Figur 6a) oder ein DotCode (310) aufgedruckt sein (siehe Figur 6b). Sie dienen vorteilhaft der visuellen Abgrenzung der Felder für die Bildverarbeitung sowie zur Bestimmung der durch den Anwender ausgeführten Durchzugsgeschwindigkeit des Teststreifens durch eine Auswertungssoftware (siehe auch "dynamische Methode").

Vor oder hinter (stromabwärts oder stromaufwärts) den Feldern kann optional ein Barcode (320) aufgedruckt werden, der übliche Informationen zum Teststreifen enthält, z.B. die Art des Testes (Malaria-Erreger, HIV oder Chargennummer) und/oder das Verfallsdatum des Teststreifens u.a.

In einer weiteren Ausführungsform kann ebenfalls ein Mimetikum eingesetzt werden, dass in der Größenordnung einer Zelle oder eines Erregers vorliegt und gleiche oder verschiedene Binder aufweist und ebenfalls von den Bindern auf mindestens einem Feld spezifisch gebunden wird.

Ein solches Mimetikum ist beispielsweise ein (Latex- oder Polystyrol-) Bead, magnetisches Kügelchen oder Sphäroid enthaltend einen gleichen oder verschiedenen Binder, welche der Probe zugesetzt wurden oder mindestens einem Feld auf dem Teststreifen vorgelegt wurden.

Mit diesem Mimetikum lassen sich aus der Körperflüssigkeit beliebige Analyten, wie gelöste Makromoleküle (Viren, Nukleinsäuren, Proteinkomplexe, Proteine, Peptide) oder auch kleine Moleküle (organische Moleküle, Hormone, Vitamine, Metabolite, Drogen) quantitativ nachweisen. Hierzu muss eine "künstliche Zelle" (Mimetikum) vorgelegt werden, an die diese löslichen Moleküle oder Viren spezifisch binden bzw. adressiert sind, so dass eine Situation entsteht, die der Präsenz von erregerspezifischen Markern an echten Zellen entspricht.

Daher betrifft die Erfindung ebenfalls ein erfindungsgemäßes Testsystem enthaltend einen Teststreifen, der ein oder mehrere Felder aufweist, die mindestens einen gleichen oder verschiedenen Binder aufweisen, die geeignet sind einen oder mehrere Analyten, Zellen, infizierte Zellen, Erreger zu binden, ggfs. mittels einem Mimetikum, insbesondere in Form von Beads, magnetischen Kügelchen und/oder Sphäroiden.

Erfindungsgemäß kann das Feld beliebig groß und beliebig ausgewiesen sein. Bevorzugt ist jedoch die Ausweisung mehrerer Felder, die räumlich voneinander getrennt sind.

Dies führt zu einer Anreicherung der infizierten Zellen oder Erreger auf mindestens einem dieser Felder, während die flüssige Probe der Schwer- oder Kapillarkraft folgend weiter vorzugsweise in ein Auffang-Reservoir (z.B. Schwamm, Reservoir, Vlies, Gewebe etc.) fließt. Alternativ kann ebenfalls eine endständige Mikropumpe vorgesehen sein (z.B. Mikropumpe mp6, Bartels Microtechnik GmbH). Die Zellen oder Erreger können in der Flüssigkeit ihre physiologische Form behalten.

Die Anreicherung der infizierten Zellen oder Erreger kann ebenfalls mechanisch durch ein Sieb oder Filter oder durch eine Verengung des besagten (Mikro-)Kanals erfolgen.

Ebenfalls können Zellen biologisch beispielsweise als spezifische Aggregate angereichert werden. Solche Aggregate können z.B. durch Zugabe von Fibrinogen als Roleaux von Erythrozyten erhalten werden.

Daher betrifft die Erfindung in einer weiteren Ausführungsform ein Testsystem enthaltend einen Teststreifen, wobei mindestens ein oder mehrere Analyten, Zellen oder Erreger lokalisiert werden, insbesondere mechanisch lokalisiert werden.

In einem zweiten Schritt kann die Färbung der infizierten Zellen oder Erreger durch Zugabe einer Färbelösung in den inzwischen entleerten Proben-Port erfolgen oder aus einem Blister-Depot, dass durch mechanische Einwirkung geöffnet wird und in den Kanal mündet. Die Färbung ist je nach Analyt bzw. Testausführung vorzugsweise eine einfache histologische Färbung des Zellplasmas und der DNA in den Zellkernen oder eine immunchemische Färbung (z.B. Giemsa).

Hierbei werden vorzugsweise weitere Antikörper, Peptide bzw. Aptamere (nachstehend: Färbe-Liganden) eingesetzt, die an eine zweite, unabhängige Bindungsstelle auf der Oberfläche der immobilisierten bzw. gefangenen Zellen binden. Diese Liganden sind vorzugsweise mit einem Fluoreszenz-Farbstoff gekoppelt, so dass durch ihre Bindung an die Zelloberfläche ein ausreichendes Fluoreszenzsignal entsteht und dank der optischen Vergrößerung vor dem Hintergrund sichtbar gemacht wird, so dass einzelne bildfähige Farbwerte oder Farbkontraste, wie vorstehend ausgeführt, entstehen.

Daher betrifft die Erfindung ebenfalls ein Testsystem, wobei die auf dem Teststreifen gebundenen Analyten, Zellen, Erreger mittels eines Färbe-Liganden, der an einen Farbstoff vorzugsweise einen Fluoreszenzfarbstoff gekoppelt ist, farblich markiert werden und folglich einer erfindungsgemäßen Bildauswertung zugänglich sind.

Diese doppelte Erkennung im "Sandwichsystem" einerseits durch den Binder (Fänger-Liganden) und andererseits durch den (nachfolgenden) Färbe-Liganden erlaubt eine eindeutige Typisierung der infizierten Zellen oder Erreger und schließt Falsch-Positive durch eine unspezifische Bindung anderer Zellen aus.

Entsprechende Binder (Fänger-Liganden) und Färbe-Liganden für Zellen und Erreger sind in der Literatur beschrieben und können vom Fachmann entsprechend eingesetzt werden. Beispielsweise weisen infizierte Zellen (Malaria, Cholera, etc.) entsprechende Oberflächenmarker auf, die von den Bindern (Fänger-Liganden und Färbe-Liganden) erkannt werden können.

Das Verfahren ermöglicht die Anreicherung und eindeutige visuelle Erkennung von Zelltypen wie z.B. Malaria-infizierten Erythrozyten, CD4+ Zellen oder ebenfalls infizierten Zellen in der HIV-Diagnostik, ebenfalls die Erkennung und Typisierung von Bakterien in der Diagnose von z.B. Sepsis, Cholera, Tuberkulose etc.

Die Anreicherung und Erkennung ist sogar im Multiplex für eine Vielzahl von Zelltypen oder Erregern möglich. Hierzu werden im (Mikro)Kanal verschiedene Felder mit jeweils verschiedenen Bindern beschichtet, die jeweils einen gewünschten Zelltyp oder Erreger spezifisch fangen (capture) und anreichern. Die immunchemische Markierung erfolgt mittels Durchfluss eines Gemisches von vorzugsweise fluoreszenzmarkierten Liganden für alle gewünschten Zelltypen oder Erreger, die hierdurch spezifisch angefärbt werden.

Das Hintergrundsignal der spezifischen Markierung durch die z.B. im Kanal verbleibende Färbelösung ist bei der Messung nicht relevant, da die Färbelösung vorzugsweise niedrig konzentriert sein soll. Z.B.: Bei einem Volumen in dem Mikrokanal (Kapillare) (0,1 mm x 0,02 mm x 50 mm) von 0,1 µl und über einem Feld (0,1mm x 0,1mm x 0,2mm) von 0,0002 µl und eingesetzten 50 µl niedrig-konzentrierter Färbelösung wird diese in der Kapillare 500-fach und über einem Feld 250.000-fach ausgetauscht.

Der Teststreifen erlaubt daher nach Probenzugabe im ersten Durchflussschritt die spezifische Anreicherung und Immobilisierung von bestimmten Zellen oder Erregern aus der Körperflüssigkeitsprobe. Durch zumeist nachfolgende Zugabe einer Färbelösung werden sowohl alle nicht gebundenen, restlichen Zellen aus dem Mikrokanal gewaschen, als auch die Zellen oder Erreger vorzugsweise spezifisch mit einem (Fluoreszenz-)Farbstoff markiert. Besonders vorteilhaft ist, dass erfindungsgemäß kein zusätzlicher Waschschritt erforderlich sein kann.

Zur weiteren Verstärkung des Farbsignals können Polymere, vorzugsweise Dendrimere verwendet werden, die an ihren bis zu 1.000 Enden je einen intensiv leuchtenden Fluorophor tragen (auch "Verstärker-Komplex" genannt).

Solche Dendrimere sind zusätzlich zu den Fluorophoren mit weiteren Liganden wie Antikörpern, Peptiden, Aptameren versehen. Die entstehenden Moleküle ähneln somit den o.g. Färbeliganden, allerdings mit einer viel höheren Anzahl von Fluorophoren pro Molekül. Ferner können verschiedene Dendrimere verwendet werden, die verschiedene Fluorophore aufweisen, die spezifisch mit derselben oder verschiedenen bestimmten Wellenlängen anzuregen sind und mit Maxima verschiedener Wellenlängen fluoreszieren.

Sobald sich die Färbeflüssigkeit im Kanal vollständig verteilt, bzw. ihn durchflossen hat, befinden sich ungebundene Färbe-Liganden, ggfs. verstärkt mit Dendrimeren gleichmäßig verteilt im Kanal.

Zellen, die auf den Feldern im Kanal immobilisiert sind, tragen an Markern gebundene Färbe-Liganden auf ihren Oberflächen. Die Konzentration der Färbe-Liganden in der Färbeflüssigkeit ist vorzugsweise in der Weise gewählt, dass Färbe-Liganden an den infizierten Zellen, Erregern gegenüber den freien, in der Flüssigkeit vorhanden Färbe-Liganden angereichert werden.

Dadurch erscheinen infizierte Zellen im Kontrast als heller gefärbte/fluoreszierende Punkte bzw. Flächen vor einem gefärbten/fluoreszierenden Hintergrund, während nicht infizierte Zellen unsichtbar bleiben.

Überraschender Weise sind erfindungsgemäß bereits 2-5 detektierte Erreger ausreichend, und bei einer angenommenen Capture-Effizienz von 10% in 10 µl aufgegebenem Vollblut sind folglich 20 - 50 Erreger enthalten. Die Nachweisgrenze liegt daher besonders vorteilhaft bei 3-5 Erregern pro µl Blut. Kommerziell bereits erhältliche Teststreifen (Lateral Flow Tests), die Malaria über den indirekten Nachweis von löslichen Erregerproteinen im Blut (HRP II, Aldolase, S-Antigen), weisen eine Sensitivität von ca. 100 Erregern pro µl auf.

Zum Vergleich: Bei Malaria findet man eine Parasitämie von 2-5 Erregern pro µl im symptomatisch eher unauffälligen Anfangsstadium, wohingegen während eines Fieberschubes Parasitämien von 100.000 Erregern pro µl auftreten können.

In Gegenwart einer (Anregungs-)Beleuchtung kann die erfindungsgemäße Bildauswertung der Farbkontraste von heller gefärbten/fluoreszierenden Zellen vor einem gefärbten/fluoreszierenden Hintergrund erfolgen. Durch die Bestimmung hellerer Punkte bzw. Flächen lässt sich die Zahl der infizierten Zellen pro Volumen Probe durch Zählen und Berechnung (Integration, supra) ermitteln, da das Probenvolumen und die Bindungseffizienz der Felder bekannt sind. Ggfs. ist eine Kalibrierung erforderlich.

Aufgrund der vorstehenden Maßnahmen kann bei Aufnahme des probebeladenen Teststreifens in das Testsystem eine hinreichende Farbintensität und Farbkontrastwirkung samt hinreichenden Farbwerten für ein oder mehrere Bild(er) erhalten werden, welches über die erfindungsgemäße optische Vergrößerungseinheit und Bildverarbeitungsvorrichtung in der mobilen Rechnereinheit ausgelesen werden kann, wie vorstehend ausgeführt, so dass eine effektive Bildverarbeitung erfolgen kann.

Im Fall der o.g. "statischen Methode" können Bilder oder Serienbilder (auch Video) mit hinreichender diagnostischer Aussage erhalten werden, wobei eine qualitative Analytik oder Diagnostik ermöglicht wird. Beispielsweise kann die Aussage lauten, dass ein Malariaerreger in der Körperflüssigkeit vorhanden ist.

Besonders bevorzugt ist jedoch die o.g. "dynamische Methode", wobei in einer Bilderserie oder Videosequenz die optische Auslesung mehrerer Felder des Teststreifens erfolgen kann. Der Teststreifen soll vorzugsweise gleichmäßig relativ zur optischen Vergrößerungseinheit transportiert/bewegt werden.

Dies kann einfachhalber durch vorsichtiges manuelles Herausziehen des Teststreifens erfolgen oder insbesondere mittels einem elektromotorgetriebenen Transport, einen Federaufzugmotor oder einer Gasdruckfeder, die durch das Einschieben komprimiert wird.

Daher betrifft die Erfindung ebenfalls ein Verfahren, das durch Anspruch 12 definiert wird.

Weiterhin ist bevorzugt, dass der Teststreifen relativ zur erfindungsgemäßen Optik, insbesondere zur optischen Vergrößerung, transportiert oder bewegt wird (so genannte "dynamische Methode").

Daher betrifft die Erfindung einen zusätzlichen optionalen Verfahrensschritt b'.), wobei der Teststreifen relativ zur erfindungsgemäßen Optik, insbesondere zur optischen Vergrößerung, transportiert oder bewegt wird.

Die optische Vergrößerungseinheit samt Mittel zur Aufnahme eines Teststreifens aufweisend eine Körperflüssigkeit können Gegenstand eines Aufsatzes für die mobile Rechnereinheit, wie z.B. ein Smartphone, oder in Form einer Docking-Station (mittels Connector/Schnittstellenstecker oder drahtlos) oder Bluetooth^{®}- oder WLAN-Gerät sein.

Der Aufsatz wird im Fall eines Smartphone oder Tablet-Computer in der Regel zumindest Teile der Rückenfläche abdecken. Er kann mechanisch, magnetisch und lösbar mit dem Smartphone oder Tablet-Computer verbunden werden. Ein Aufsatz kann auch in Form eines Tischständers (beispielsweise einer "Docking-Station") angeboten werden. Der Tischständer kann über eine eine eigene (aufladbare) Stromversorgung verfügen und auch zusätzliche Funktionen übernehmen, beispielsweise als Ladestation für das Smartphone oder Tablet-Computer dienen. Ein Tischständer oder sonstiger Aufsatz kann unabhängig von einem Smartphone oder Tablet-Computer verkauft werden und wird zusammen mit einem gängigen Smartphone oder Tablet-Computer zu einer leistungsfähigen Analysestation.

Das Testsystem kann durch vorstehende Merkmale entsprechend ausgebildet sein, auch wenn diese Merkmale im Bezug zum erfindungsgemäßen Verfahren stehen.

Daher betrifft die Erfindung einen Aufsatz oder Tischständer, insbesondere in der Ausführungsform einer Docking-Station enthaltend eine optische Vergrößerung samt Mittel zur Aufnahme eines Teststreifens wie vorstehend beschrieben, welche mit einer mobilen Rechnereinheit enthaltend eine Bildverarbeitungsvorrichtung verbunden wird/werden kann. Weiterhin betrifft die Erfindung die Verwendung eines erfindungsgemäßen Testsystems oder Testverfahren zur Diagnose von Erkrankungen aller Art, wie durch Anspruch 13 definiert, insbesondere Infektionskrankheiten, wobei mittels Auswertung und erfindungsgemäßer Identifizierung von Zellen, infizierten Zellen, Erreger, aussagekräftigen Analyten auf eine Erkrankung eines Patienten/Probanden geschlossen werden kann. Dies betrifft insbesondere solche Erkrankungen verursacht durch Pilze, Viren und Bakterien, oder Pathogenen oder Erregern, insbesondere solche, wie Adenoviren, Bacillus anthracis, Bordetella pertussis, Bordetella parapertussis, Borrelia recurrentis, Brucella sp., Campylobacter sp., Chlamydia psittaci, Clostridium botulinum, Corynebacterium diphtheriae, Coxiella burnetii, humanpathogene Cryptosporidium sp., Ebolavirus, Escherichia coli, enterohämorrhagische Stämme (EHEC), Francisella tularensis, FSME-Virus, Gelbfiebervirus, Giardia lamblia, Haemophilus influenzae, Hantaviren, Hepatitis-A-Virus, Hepatitis-B-Virus, Hepatitis-C-Virus, Hepatitis-D-Virus, Hepatitis-E-Virus, Influenzaviren, Lassavirus, Legionella sp., humanpathogene Leptospira sp., Listeria monocytogenes, Marburgvirus, Masernvirus, Mumpsvirus, Mycobacterium leprae, Mycobacterium tuberculosis/africanum, Mycobacterium bovis, Neisseria meningitidis, Norwalk-ähnliches Virus, Poliovirus, Pseudomonas aeruginosa, Rabiesvirus, Rickettsia prowazekii, Rotavirus, Rubellavirus, Salmonella Paratyphi, Salmonella Typhi, Shigella sp., Trichinella spiralis, Varizella-Zoster-Virus, Vibrio cholerae O 1 und O 139, Yersinia enterocolitica, Yersinia pestis, Treponema pallidum, HIV, Echinococcus sp., Plasmodium sp., Toxoplasma gondii. Weiterhin erfindungsgemäß umfasst sind multiresistente pathogene Bakterien (MRSA), wie Streptococcus pneumoniae, Streptococcus aureus.

### Beispiele und Figuren:

Diese Beispiele dienen ausschließlich zur Erläuterung der Erfindung, ohne die Erfindung auf diese Beispiele zu beschränken.

### Beschreibung der Figuren:

Figur 1 beschreibt eine bevorzugte Ausführungsform eines erfindungsgemäßen Teststreifens.
Figur 2 zeigt die Aufnahme eines Teststreifens in die erfindungsgemäße Vorrichtung unter Verwendung eines Smartphone (unten), wobei über die Digitalkamera eine optische Vergrößerung samt geeigneter Kammer angeordnet ist.
Figur 3: Aufsicht von oben mit dem trichterförmigen Proben-Port (10), jedoch in drei Untertrichtern (Kompartimenten: 20, 30, 40) mittels Trennstegen (50) unterteilten Proben-Port (10).
Figur 4: Aufsicht der Anordnung mit den (Kompartimenten: 20, 30, 40) und Verbindungskanal (90) samt zuleitenden Mikrokanälen.
Figur 5: Querschnitt der Anordnung zu den Figuren 3 und 4 samt Fassung (70) und Auflage (100).
Figur 6a: Aufsicht eines Teststreifens (70) aufweisend eine nanoporöse Membran (140) mit aufgebrachten Feldern samt Bindern (Fänger) (130), wobei eine Probe enthaltend Erreger (160) durch den Verbindungskanal (90) in den Detektionsraum (110) eintreten kann und Markierungen (300) aufweist. Ferner ist ein Barcode (320) vorgesehen.
Figur 6b: Aufsicht eines Teststreifens (70) aufweisend eine nanoporöse Membran (140) mit aufgebrachten Feldern samt Bindern (Fänger) (130), wobei eine Probe enthaltend Erreger (160) durch den Verbindungskanal (90) in den Detektionsraum (110) eintreten kann und DotCode (310) aufweist. Ferner ist ein Barcode (320) vorgesehen.
Figur 7: Querschnitt eines Testreifens (70) samt Auflage (100) aufweisend eine nanoporöse Membran (140) und zusätzlich unterlegtem Filterpapier (120) und aufgebrachten Feldern samt Bindern (Fänger) (130), wobei eine Probe enthaltend Erreger (160) durch den Verbindungskanal (90) in den Detektionsraum (110) eintreten kann. Die Pfeile verdeutlichen die erreichte Sogrichtung für die Erreger (160) durch den erreichten Abfluss.
Figur 8: Querschnitt eines Testreifens (70) samt Auflage (100) aufweisend eine nanoporöse Membran (140) und nebenangeordnetem Filterpapier (120) oder Kapillarpumpe (170) und aufgebrachten Feldern samt Bindern (Fänger) (130), wobei eine Probe enthaltend Erreger (160) durch den Verbindungskanal (90) in den Detektionsraum (110) eintreten kann. Die Pfeile verdeutlichen die erreichte Sogrichtung die Erreger (160) durch den erreichten Abfluss.

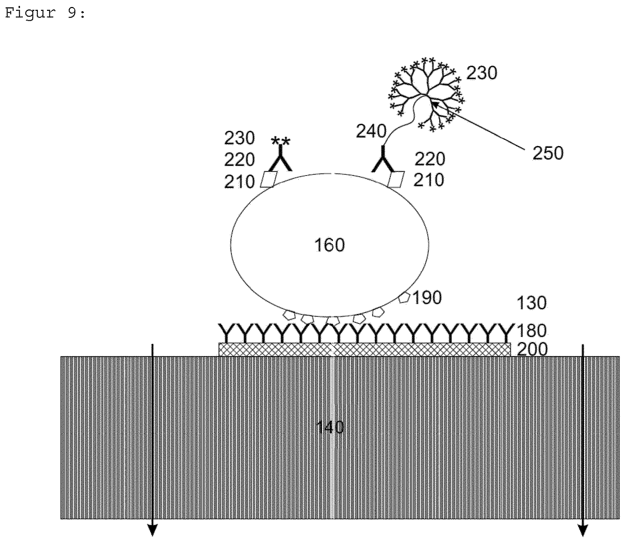

Figur 9: Auf einer nanoporösen Membran (140) sind Felder mit Bindern (130) aufgebracht, bestehend aus einer Schicht (200) und Fängern, hier: Antikörper (180). Die Schicht (200) z.B. aus Polyethlenglykol (PEG) verhindert eine unspezifische Bindung von Zellen/Erregern an die Oberfläche. PEG bildet eine gelartige Schicht aus, so dass der Antikörperkontakt (180) an Zellen/Erregern durch ein Einsinken und eine höhere räumliche Flexibilität der Antikörper (180) erhöht wird.

Die Erreger (160) gleiten über die Oberfläche und binden mit ihren Oberflächen-Antigenen (190) an die Fänger (180). Es wird nur die Unterseite der Erreger (160) blockiert. Andere, abweichende Antigene (210) an der Oberseite der Erreger sind frei zugänglich und binden an zugegebene Detektionsantikörper (220). Herkömmlicherweise werden diese durch direkte Ankopplung weniger Fluorophore fluoreszenzmarkiert.

Vorzugsweise soll ein Signalverstärker-Komplex eingesetzt werden, der bis zu hunderte Fluorophore an einen Antikörper bindet und ein stärkeres Fluoreszenzsignal erzeugt. Der Detektionsantikörper (220) wird über einen Linker (240), z.B. ein einzelnes PEG-Molekül, an ein Dendrimer (250) gekoppelt. Dieses enthält auf der Oberfläche hunderte von chemischen Gruppen z.B. Aminogruppen, an die jeweils ein Fluorophor gekoppelt wurde.

## Patentansprüche

1. Testsystem zur Verwendung in der Diagnose von Erkrankungen umfassend eine
i.) mobile Rechnereinheit, nämlich ein Smartphone oder Tablet-Computer,
ii.) eine Bildverarbeitungsvorrichtung samt mindestens einer optischen Vergrößerungseinheit
und
iii.) Mittel zur Aufnahme eines Teststreifens (70), wobei eine Körperflüssigkeit aufweisend Zellen, infizierte Zellen, Erreger (160) auf den Teststreifen aufgebracht wird, und
iv.) den Teststreifen (70) enthaltend ein oder mehrere Fänger-Liganden (130) die Zellen, infizierte Zellen, Erregen (160) aus iii.) binden,
wobei diese Zellen, Erreger, mittels eines Färbe-Liganden (220), der an einen Fluoreszenzfarbstoff (250) gekoppelt ist, farblich markiert werden,
**dadurch gekennzeichnet, dass** der Teststreifen in der Weise angeordnet ist, dass die Bildverarbeitungsvorrichtung samt mindestens einer optischen Vergrößerungseinheit eine optische Auslesung (read-out) der Körperflüssigkeit erlaubt,
und die Bildverarbeitungsvorrichtung eine Digitalkamera ist, die sich in einer mit dem Smartphone oder dem Tablet-Computer verbundenen separaten Einheit befindet, wobei die optische Vergrößerungseinheit oder Bildverarbeitungsvorrichtung eine oder mehrere beliebige Lichtquellen aufweist, und mindestens eine Fluoreszenzbeleuchtung, wobei der Teststreifen einen Proben-Port mit einer ersten trichterförmigen Vertiefung (10) enthält, die in mehrere Kompartimente (20,30,40) unterteilt ist, wobei mindestens ein Kompartiment: (20) mit einer vorgelegten Färbelösung samt dem Färbe-Liganden enthält, ausgewählt aus der Gruppe Antikörper, Peptide, Aptamere, die mit dem Fluoreszenz-Farbstoff gekoppelt sind.

2. Testsystem nach einem der vorstehenden Ansprüche, wobei die optische Vergrößerungseinheit mindestens ein Objektiv oder eine Anordnung von einem oder mehreren Objektiven oder Linsen enthält, insbesondere in Form eines Mikroskops.

3. Testsystem nach einem der vorstehenden Ansprüche, wobei die optische Vergrößerungseinheit in Gegenwart der Bildverarbeitungsvorrichtung Vergrößerungen von mindestens 10-fach oder mindestens 100-fach oder mindestens 1000-fach erreicht.

4. Testsystem nach einem der vorstehenden Ansprüche, wobei Mittel zur Aufnahme eines Teststreifens eine Kammer enthaltend einen Slot oder Einschub oder eine Halterung für einen Teststreifen umfassen.

5. Testsystem nach einem der vorstehenden Ansprüche, enthaltend einen Teststreifen, wobei ein Ein- oder Ausziehen des Teststreifens über einen Slot oder Einschub mittels eines elektromotorgetriebenen Transportes, einen Federaufzugmotor oder einer Gasdruckfeder erfolgt.

6. Testsystem nach Anspruch 1 umfassend einen Teststreifen enthaltend mindestens einen (Mikro)Kanal.

7. Testsystem nach einem der vorstehenden Ansprüche, enthaltend einen Teststreifen, der ein oder mehrere Felder aufweist, die mindestens gleiche oder verschiedene Fänger-Liganden aufweisen, insbesondere Mimetikum, Beads, magnetische Kügelchen und Sphäroiden.

8. Testsystem nach einem der vorstehenden Ansprüche, enthaltend einen Teststreifen, **dadurch gekennzeichnet, dass** der Teststreifen den Proben-Port und mindestens einen (Mikro)Kanal enthält.

9. Testsystem nach Anspruch 8, enthaltend einen Teststreifen, **dadurch gekennzeichnet, dass** der Teststreifen mindestens eine Kapillare samt Markierungen (300), DotCode (310) und / oder Barcode (320) aufweist.

10. Testsystem nach einem der vorstehenden Ansprüche, enthaltend einen Teststreifen, **dadurch gekennzeichnet, dass** der Teststreifen eine poröse Membran (140), eine Kapillarpumpe (170) oder Filterpapier, Vlies (120) enthält.

11. Testsystem nach einem der vorstehenden Ansprüche, enthaltend einen Teststreifen, **dadurch gekennzeichnet, dass** die Körperflüssigkeit aus Blut oder Vollblut ausgewählt ist.

12. Testverfahren zur Durchführung an einem Testsystem nach einem der vorstehenden Ansprüche umfassend die Schritte:
a.) Eine Körperflüssigkeit wird auf einen Teststreifen aufgebracht, wobei mindestens ein Fänger-Ligand lokalisiert auf dem Teststreifen einen Erreger bindet,
b.) Ein Fluoreszenzfarbstoff wird auf den Teststreifen aufgebracht, wobei ein Erreger aus a.) farblich markiert wird,
c.) der Teststreifen relativ zur optischen Vergrößerung, transportiert oder bewegt wird.
d.) Zumindest ein Kontrastbild aus c.) einer Bildverarbeitung zugänglich ist und in der mobilen Rechnereinheit ausgewertet wird.

13. Verwendung eines Testsystems oder Testverfahrens nach einem der vorstehenden Ansprüche zur Diagnose von Erkrankungen.

14. Verwendung eines Testsystems oder Testverfahrens nach Anspruch 13 im Point-of-Care Bereich.

## Claims

1. A test system for use in the diagnosis of diseases, comprising
i.) a mobile computing unit, specifically a smartphone or a tablet computer,
ii.) an image-processing device together with at least one optical magnification unit,
and
iii.) means for receiving a test strip (70), wherein a bodily fluid containing cells, infected cells, pathogens (160), is applied to the test strip, and
iv.) the test strip (70) containing one or more capture ligands (130) which bind cells, infected cells, pathogens from iii.),
wherein these cells, pathogens, are marked in color by means of a stain ligand (220), which is conjugated with a fluorescent dye (250),
**characterized in that** the test strip is arranged such that the image-processing device together with at least one optical magnification unit allows for optical read-out of the bodily fluid,
and the image-processing device is a digital camera, which is located in a separate unit connected to the smartphone or the tablet computer,
wherein the optical magnification unit or image-processing device comprises one or more light sources of any kind, and at least one fluorescent light, wherein the test strip contains a sample port having a first funnel-shaped depression (10), which is subdivided into a plurality of compartments (20, 30, 40), wherein at least one compartment (20) contains a provided staining solution together with the stain ligand, selected from the group of antibodies, peptides, and aptamers, which are conjugated with the fluorescent dye.

2. The test system according to any one of the preceding claims, wherein the optical magnification unit contains at least one objective or an arrangement of one or more objectives or lenses, in particular in the form of a microscope.

3. The test system according to any one of the preceding claims, wherein the optical magnification unit, in the presence of the image-processing device, reaches magnifications of at least 10 times or at least 100 times or at least 1000 times.

4. The test system according to any one of the preceding claims, wherein means for receiving a test strip comprise a chamber containing a slot or insert or a holder for a test strip.

5. The test system according to any one of the preceding claims, containing a test strip, wherein the test strip is pulled in and out via a slot or insert by means of electromotively driven transport, a spring wind-up motor, or a gas spring.

6. The test system according to claim 1, comprising a test strip containing at least one (micro)channel.

7. The test system according to any one of the preceding claims, containing a test strip that has one or more fields that have at least the same or different capture ligands, in particular mimetics, beads, magnetic balls, and spheroids.

8. The test system according to any one of the preceding claims, containing a test strip, **characterized in that** the test strip contains the sample port and at least one (micro)channel.

9. The test system according to claim 8, containing a test strip, **characterized in that** the test strip comprises at least one capillary, along with markings (300), a DotCode (310), and/or a bar code (320).

10. The test system according to any one of the preceding claims, containing a test strip, **characterized in that** the test strip contains a porous membrane (140), a capillary pump (170), or filter paper or mat (120).

11. The test system according to any one of the preceding claims, containing a test strip, **characterized in that** the bodily fluid is selected from blood or whole blood.

12. A test method for being carried out on a test system according to any one of the preceding claims, comprising the following steps:
a.) a bodily fluid is applied to a test strip, wherein at least one capture ligand binds a pathogen in a localized manner on the test strip,
b.) a fluorescent dye is applied to the test strip, wherein a pathogen from a.) is marked in color,
c.) the test strip is transported or moved relative to the optical magnification,
d.) at least one contrast picture from b.) is available for image processing and is evaluated in the mobile computing unit.

13. The use of a test system or test method according to any one of the preceding claims for diagnosing diseases.

14. The use of a test system or test method according to claim 13 in the point-of-care sector.

## Revendications

1. Système de test pour une utilisation dans le diagnostic de maladies, comprenant
i.) une unité de calcul mobile, spécifiquement un smartphone ou un ordinateur tablette,
ii.) un dispositif de traitement d'images conjointement avec au moins une unité de grossissement optique,
et
iii.) des moyens de réception d'une bandelette de test (70), dans lequel un fluide corporel contenant des cellules, des cellules infectées, des pathogènes (160), est appliqué à la bandelette de test, et
iv.) la bandelette de test (70) contenant un ou plusieurs ligands de capture (130) qui se lient aux cellules, aux cellules infectées, aux pathogènes de iii.),
dans lequel ces cellules, pathogènes, sont marqués en couleur au moyen d'un ligand de coloration (220), qui est conjugué à un colorant fluorescent (250),
**caractérisé en ce que** la bandelette de test est agencée de telle sorte que le dispositif de traitement d'images conjointement avec au moins une unité de grossissement optique permet la lecture optique du fluide corporel,
et le dispositif de traitement d'images est une caméra numérique, qui est située dans une unité distincte connectée au smartphone ou à l'ordinateur tablette,
dans lequel l'unité de grossissement optique ou le dispositif de traitement d'images comprend une ou plusieurs sources lumineuses d'un type quelconque, et au moins une lumière fluorescente, dans lequel la bandelette de test contient un orifice d'échantillon ayant une première dépression en forme d'entonnoir (10), qui est subdivisée en une pluralité de compartiments (20, 30, 40), dans lequel au moins un compartiment (20) contient une solution de coloration fournie conjointement avec le ligand de coloration, choisi dans le groupe constitué par les anticorps, les peptides et les aptamères, qui sont conjugués au colorant fluorescent.

2. Système de test selon l'une quelconque des revendications précédentes, dans lequel l'unité de grossissement optique contient au moins un objectif ou un agencement d'un ou plusieurs objectifs ou lentilles, en particulier sous la forme d'un microscope.

3. Système de test selon l'une quelconque des revendications précédentes, dans lequel l'unité de grossissement optique, en présence du dispositif de traitement d'images, atteint des grossissements d'au moins 10 fois, d'au moins 100 fois ou d'au moins 1000 fois.

4. Système de test selon l'une quelconque des revendications précédentes, dans lequel les moyens de réception d'une bandelette de test comprennent une chambre contenant une fente, un insert ou un support pour une bandelette de test.

5. Système de test selon l'une quelconque des revendications précédentes, contenant une bandelette de test, dans lequel la bandelette de test est rentrée et sortie par l'intermédiaire d'une fente ou d'un insert au moyen d'un transport entraîné de manière électromotrice, d'un moteur à remontage par ressort ou d'un ressort à gaz.

6. Système de test selon la revendication 1, comprenant une bandelette de test contenant au moins un (micro)canal.

7. Système de test selon l'une quelconque des revendications précédentes, contenant une bandelette de test qui a un ou plusieurs champs qui ont au moins les mêmes ligands de capture ou des ligands de capture différents, en particulier des mimétiques, des billes, des billes magnétiques et des sphéroïdes.

8. Système de test selon l'une quelconque des revendications précédentes, contenant une bandelette de test, **caractérisé en ce que** la bandelette de test contient l'orifice d'échantillon et au moins un (micro)canal.

9. Système de test selon la revendication 8, contenant une bandelette de test, **caractérisé en ce que** la bandelette de test comprend au moins un capillaire, avec des marquages (300), un DotCode (310) et/ou un code-barres (320).

10. Système de test selon l'une quelconque des revendications précédentes, contenant une bandelette de test, **caractérisé en ce que** la bandelette de test contient une membrane poreuse (140), une pompe capillaire (170) et un papier filtre ou un tissu filtrant (120).

11. Système de test selon l'une quelconque des revendications précédentes, contenant une bandelette de test, **caractérisé en ce que** le fluide corporel est choisi parmi le sang ou le sang total.

12. Méthode de test destinée à être mise en œuvre sur un système de test selon l'une quelconque des revendications précédentes, comprenant les étapes suivantes :
a.) un fluide corporel est appliqué à une bandelette de test, dans lequel au moins un ligand de capture se lie à un pathogène de manière localisée sur la bandelette de test,
b.) un colorant fluorescent est appliqué à la bandelette de test, dans lequel un pathogène de a.) est marqué en couleur,
c.) la bandelette de test est transportée ou déplacée en fonction du grossissement optique,
d.) au moins une image de contraste de b.) est disponible pour traitement d'images et est évaluée dans l'unité de calcul mobile.

13. Utilisation d'un système de test ou d'une méthode de test selon l'une quelconque des revendications précédentes pour le diagnostic de maladies.

14. Utilisation d'un système de test ou d'une méthode de test selon la revendication 13 dans le domaine des lieux d'intervention ou « point-of-care ».
